# FASCICULE DE BREVET EUROPEEN

(11) **EP 2 416 973 B1**
(45) Date de publication et mention de la délivrance du brevet: **03.07.2013**
(21) Numéro de dépôt: 10715157.3
(22) Date de dépôt: 06.04.2010
(51) Int. Cl.: B60C 9/18

(54) **PNEUMATIQUE A ARMATURE DE CARCASSE RADIALE**
RADIALER LUFTREIFEN
PNEUMATIC RADIAL TIRE

(30) Priorité: 09.04.2009 FR 0952355
(43) Date de publication de la demande: 15.02.2012
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: DEAL, Michel, 03110 St-Remy-en-Rollat (FR)
(74) Mandataire: Lasson, Cédric Y. M.
(86) Numéro de dépôt international: PCT/EP2010/054482
(87) Numéro de publication internationale: WO 2010/115860

(56) Documents cités:
- EP-A- 1 837 205
- WO-A-92/12019
- US-A- 5 417 266
- US-A- 5 837 077
- US-A- 6 029 725

## Description

La présente invention se rapporte aux pneumatiques, et plus particulièrement aux pneumatiques à carcasse radiale.

Les pneumatiques à carcasse radiale, couramment appelés « pneumatiques radiaux » se sont progressivement imposés sur la plupart des marchés et en particulier sur le marché des pneumatiques pour véhicules de tourisme. Ce succès est dû en particulier aux qualités d'endurance, de confort, de légèreté et de faible résistance au roulement de la technologie radiale.

Le pneumatique radial est essentiellement constitué de flancs souples et d'un sommet plus rigide, les flancs s'étendant radialement des bourrelets jusqu'aux épaulements, les épaulements délimitant entre eux le sommet, le sommet supportant la bande de roulement du pneumatique. Chacune de ces parties du pneumatique ayant des fonctions propres, leur armature est également spécifique. Une caractéristique de la technologie radiale est qu'elle permet d'adapter précisément l'armature de chacune de ces parties de manière relativement indépendante.

L'armature du sommet d'un pneumatique radial de tourisme (couramment appelé « pneumatique tourisme ») comprend de manière connue les éléments suivants :
- une armature de carcasse radiale formée de renforts (généralement textiles) reliant les deux bourrelets du pneumatique,
- deux couches (ou nappes) croisées de triangulation du sommet consistant essentiellement en des renforts (généralement métalliques) formant chacune un angle d'environ 30° avec la direction circonférentielle du pneumatique,
- une ceinture de sommet consistant essentiellement en des renforts pratiquement parallèles à la direction circonférentielle du pneumatique, appelés souvent renforts à 0° même s'ils forment en général un angle non nul avec la direction circonférentielle, par exemple un angle compris entre 0 et 10°.

Le document EP-A-1837205 décrit les caractéristiques techniques du préambule de la revendication 1.

Si l'on schématise, on peut dire que la carcasse a pour fonction première de contenir la pression interne du pneumatique, les nappes croisées ont pour fonction première de donner au pneumatique sa rigidité de dérive et la ceinture de sommet a pour fonction première de résister à la centrifugation du sommet à haute vitesse. En outre, la coopération de tous ces éléments d'armature crée ce qu'on appelle la triangulation du sommet. C'est cette triangulation qui lui confère sa capacité à maintenir une forme relativement cylindrique face aux diverses sollicitations.

Chacun de ces éléments de l'armature de sommet est généralement associé par calandrage à des mélanges caoutchoutiques. L'empilement de ces éléments est alors rendu solidaire au cours de la vulcanisation du pneumatique.

Après plusieurs décennies de recherche, de progrès et d'optimisation de l'architecture des pneumatiques radiaux, c'est la combinaison de tous ces éléments d'armature (carcasse, couches croisées, ceinture) qui permet au pneumatique radial d'atteindre les indéniables performances de confort, de longévité et de coût de revient qui font son succès. Tout au long de ce développement, on a cherché à améliorer les performances des pneumatiques, par exemple du point de vue de leur masse et de leur résistance au roulement. C'est ainsi que le sommet du pneumatique radial a vu progressivement son épaisseur diminuer par l'adoption de renforts de plus en plus performants et de calandrages de plus en plus minces de manière à fabriquer les pneumatiques les plus légers possible.

Un objectif de l'invention est de permettre de réduire encore significativement la masse du sommet et donc des pneumatiques pour véhicule de tourisme sans réduire leurs performances par ailleurs.

Cet objectif est atteint selon l'invention qui propose un pneumatique pour véhicule de tourisme dont l'armature de sommet consiste en trois éléments distincts, lesdits trois éléments distincts consistant en :
- une armature de carcasse radiale formée de renforts reliant les deux bourrelets du pneumatique,
- une ceinture de sommet consistant essentiellement en des renforts parallèles à la direction circonférentielle du pneumatique, et
- une couche de triangulation du sommet consistant essentiellement en des renforts formant un angle compris entre 10 degrés et 80 degrés avec la direction circonférentielle du pneumatique, lesdits renforts de la couche de triangulation ayant une section aplatie.

De préférence, les renforts de section aplatie de la couche de triangulation sont en polymère, de préférence encore en film polymère thermoplastique.

De préférence, le film de polymère thermoplastique est un film de polyéthylène téréphtalate (PET) étiré multiaxialement.

Selon une première variante de l'invention, la couche de triangulation du sommet est située radialement à l'extérieur de la ceinture de sommet.

Selon une deuxième variante de l'invention, la couche de triangulation du sommet est située radialement à l'intérieur de la ceinture de sommet.

De préférence, les renforts de ceinture de sommet ont un module de traction supérieur à 25 GPa. De préférence encore ces renforts comprennent de l'acier ou de l'aramide.

De préférence, les renforts de section aplatie de la couche de triangulation présentent un module de traction supérieur à 1 GPa.

Selon une variante de l'invention, le pas entre deux renforts de section aplatie de la couche de triangulation est supérieur à la somme de leurs demi-largeurs, le pas étant mesuré selon une direction transverse aux renforts.

Selon une autre variante de l'invention, le pas entre deux renforts de section aplatie de la couche de triangulation est inférieur à la somme de leurs demi-largeurs, le pas étant mesuré selon une direction transverse aux renforts. De préférence encore, le pas est inférieur à la somme de leurs demi-largeurs d'une valeur égale à au moins quatre fois l'épaisseur maximale des renforts de section aplatie.

De préférence, la largeur des renforts de section aplatie de la couche de triangulation est au moins égale à 5 fois leur épaisseur maximale et de préférence encore au moins égale à 20 fois leur épaisseur maximale.

Selon un mode de réalisation préféré de l'invention, la couche de triangulation consiste essentiellement en des renforts formant un angle compris entre 25 degrés et 60 degrés avec la direction circonférentielle du pneumatique.

L'invention sera mieux comprise grâce à la suite de la description, qui s'appuie sur les figures suivantes :
- la figure 1 est une vue écorchée montrant schématiquement l'architecture d'un pneumatique selon l'état de la technique,
- la figure 2 est une vue écorchée montrant l'architecture d'un pneumatique selon un premier mode de réalisation de l'invention,
- la figure 3 est une vue écorchée montrant l'architecture d'un pneumatique selon un deuxième mode de réalisation de l'invention,
- la figure 4 est une vue écorchée montrant l'architecture d'un pneumatique selon un troisième mode de réalisation de l'invention,
- la figure 5 est une vue du détail A de la figure 4,
- la figure 6 est une vue écorchée montrant l'architecture d'un pneumatique selon un quatrième mode de réalisation de l'invention,
- la figure 7 est une vue écorchée montrant l'architecture d'un pneumatique selon un cinquième mode de réalisation de l'invention,
- la figure 8 est une vue écorchée montrant l'architecture d'un pneumatique selon un sixième mode de réalisation de l'invention,
- la figure 9 est une vue écorchée montrant l'architecture d'un pneumatique selon un septième mode de réalisation de l'invention,

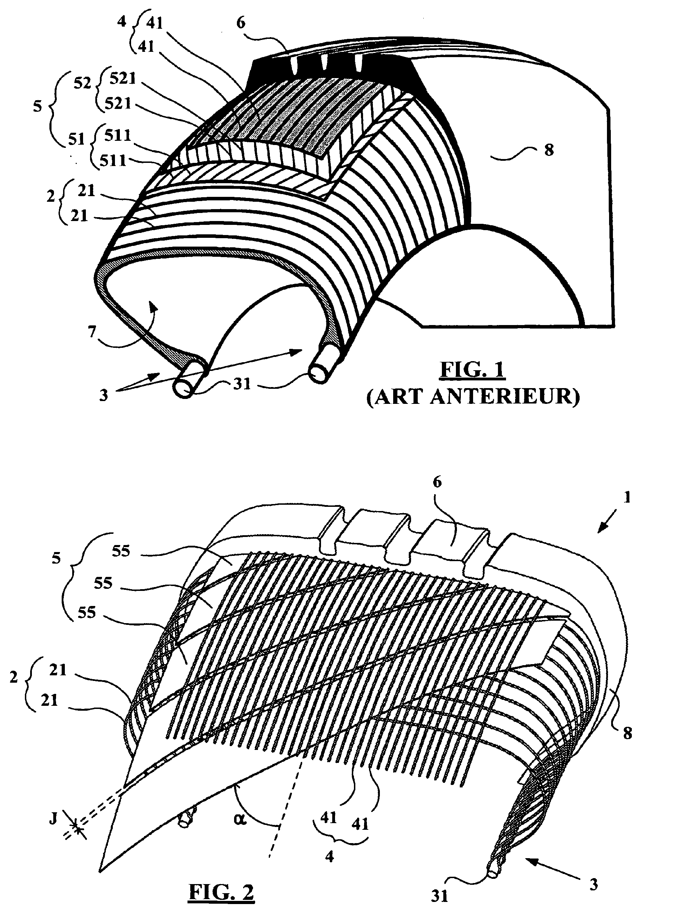

A la figure 1, on a représenté schématiquement en vue écorchée un pneumatique radial pour véhicule de tourisme selon l'état de la technique. On voit son armature de carcasse 2 qui relie les deux bourrelets 3 formés autour des tringles 31. L'armature de carcasse est formée de renforts 21 orientés radialement. Les renforts 21 sont des câbles textiles (par exemple en nylon, rayonne ou polyester). La carcasse constitue l'unique armature des flancs 8 alors que dans le sommet, c'est à dire entre les deux épaulements du pneumatique, la carcasse est surmontée de deux couches croisées de triangulation 51 et 52 et d'une ceinture 4.

Les deux couches croisées de triangulation du sommet 51 et 52 comportent des renforts (respectivement 511 et 521) orientés selon un angle généralement compris entre 20° et 40° de part et d'autre de la direction circonférentielle du pneumatique. Les renforts des couches croisées sont essentiellement des câbles métalliques.

La ceinture de sommet 4 consiste essentiellement en des renforts orientés parallèlement à la direction circonférentielle du pneumatique (appelés aussi « renforts à 0° »). Ces renforts sont généralement des câbles métalliques, des câbles textiles (par exemple en nylon, rayonne, polyester, aramide) ou des câbles hybrides.

Une couche de gomme d'étanchéité 7 couvre la cavité du pneumatique et une bande de roulement 6 vient coiffer l'armature de sommet.

A la figure 2, on a représenté un premier mode de réalisation d'un pneumatique selon l'invention.

L'armature de sommet du pneumatique selon l'invention comporte une carcasse radiale 2 et une ceinture circonférentielle 4 similaires à ce que l'on vient de décrire pour le pneumatique de l'état de la technique. En revanche, les deux couches croisées 51 et 52 de l'état de la technique sont remplacées par une couche de triangulation unique 5.

Les renforts 55 de la couche de triangulation 5 ont une section de forme aplatie et ils sont inclinés d'un angle « α » par rapport à la direction circonférentielle du pneumatique. Sur l'exemple de la figure 2, l'angle α est de 45°. La largeur des renforts plats 55 est ici d'environ 30 mm. Le pas de pose des renforts 55, mesuré selon la direction transverse des renforts, est ici supérieur à la somme des demi-largeurs des renforts de sorte que les renforts plats sont juxtaposés sans aucun recouvrement. Un jeu « J » de l'ordre de 1 à 2 mm existe entre les renforts. Le jeu peut être sensiblement constant sur toute la largeur du sommet si, comme c'est le cas sur cet exemple, les bandes de triangulation 55 ont une largeur légèrement réduite à l'approche des épaulements. Au contraire si les bandes ont une largeur constante, le jeu sera plus important au centre du sommet qu'à l'approche des épaulements du fait de la courbure du sommet.

De manière surprenante, un tel pneumatique atteint des performances de rigidité de dérive comparables à celles obtenues par les pneumatiques de l'état de la technique alors que l'épaisseur et la masse du pneumatique peuvent être très notablement réduits.

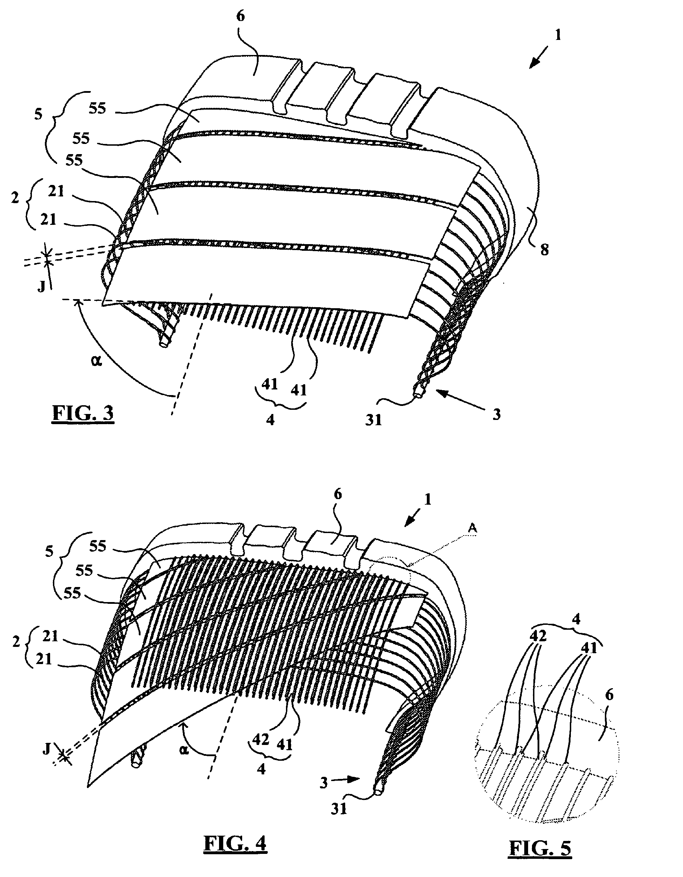

La figure 3 montre un autre mode de réalisation de l'invention dans lequel la couche 5 de renforts plats 55 est placée cette fois au-dessus de la ceinture 4. Un avantage de cette disposition est que la couche 5 assure en outre une protection de la ceinture et de la carcasse vis-à-vis des agressions (perforations, coupures).

Sur la figure 3, on voit également que les renforts plats sont nettement plus inclinés par rapport à la direction circonférentielle du pneumatique. L'angle α est ici de 80° et le jeu « J » est similaire à celui de la figure 2. La largeur des bandes 55 est d'environ 35 mm. Naturellement, on peut aussi combiner la disposition des éléments du sommet telle que décrite à la figure 2 avec l'angle d'inclinaison illustré à la présente figure 3 et vice-versa.

A la figure 4, on a représenté une variante du mode de réalisation de la figure 2 dans laquelle la ceinture circonférentielle 4 comporte dans sa partie centrale un doublement du nombre de renforts circonférentiels. Des renforts 42 viennent s'ajouter aux renforts 41 dans cette partie centrale. Si les renforts sont déposés unitairement ou par bandelettes, on comprend qu'il suffit par exemple de procéder à des enroulements supplémentaires dans la partie centrale ou de réduire le pas de pose sur cette partie. Le détail A représenté à la figure 5 permet de mieux visualiser le principe de cette variante.

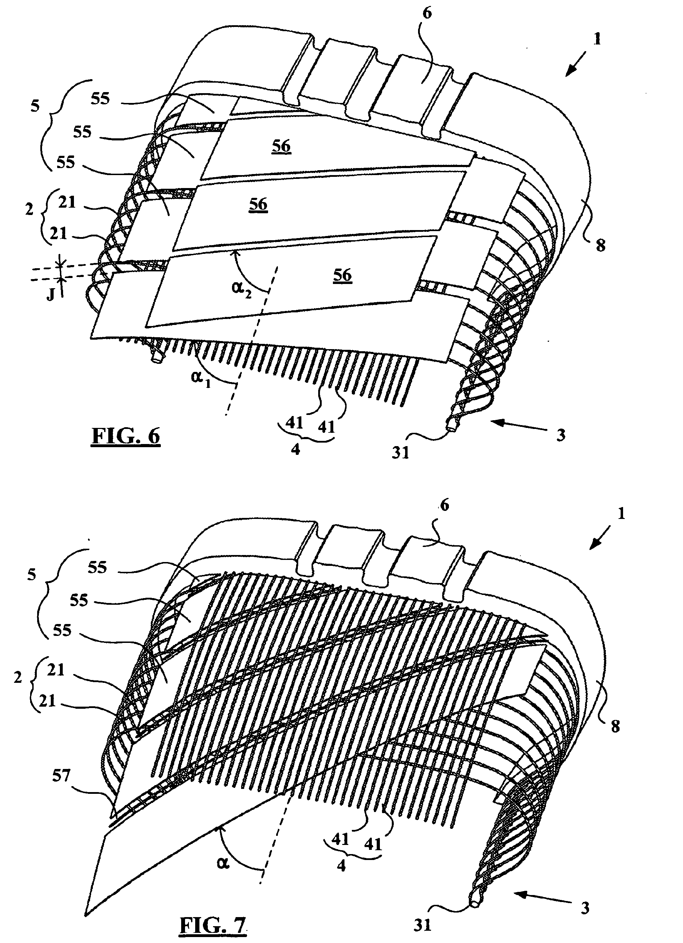

A la figure 6, on a représenté un autre mode de réalisation de l'invention dans lequel la couche de triangulation comporte deux séries de renforts plats superposés 55 et 56, de longueur et d'orientation différentes. Les bandes 55 ont un angle α₁ de 80° et les bandes 56 ont un angle α₂ de 70°. Les renforts 56 couvrent les jeux entre les renforts 55.

A la figure 7, on a représenté un autre mode de réalisation de l'invention dans lequel la couche de triangulation 5 comporte en outre des câbles 57 intercalées entre les renforts plats 55. Ces câbles peuvent être par exemple similaires aux câbles de carcasse ou de ceinture. Un avantage de la présence de ces câbles 57 est qu'ils facilitent l'extraction des gaz au cours de la vulcanisation. Ils peuvent également assurer une partie de la fonction d'armature de la couche de triangulation.

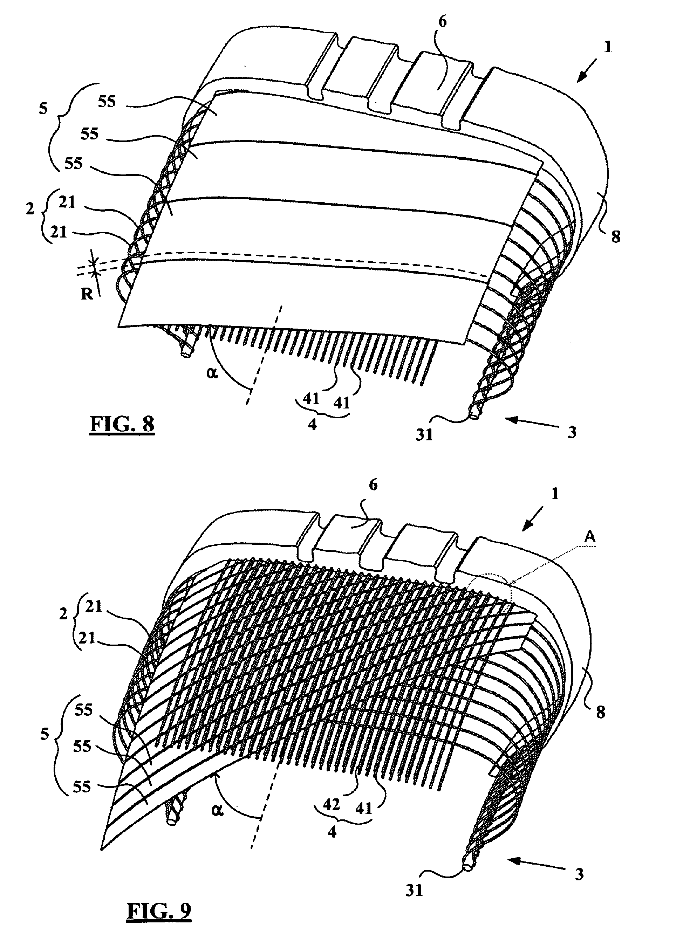

A la figure 8, on a représenté un autre mode de réalisation de l'invention dans lequel les renforts plats 55 de la couche de triangulation 5 se chevauchent partiellement entre eux pour définir un recouvrement « R » de l'ordre de 2 à 3 mm sur cet exemple. La largeur des renforts et d'environ 40 mm. Le pas de pose des renforts plats, mesuré selon leur direction transverse, est donc ici inférieur à la somme des demi-largeurs des renforts. De préférence, le recouvrement est supérieur au double de l'épaisseur maximale du renfort 55.

La figure 9 montre une variante du mode de réalisation des figures 4 et 5 dans laquelle la largeur des renforts plats 55 est réduite à environ 10 mm et le jeu « J » est d'environ 1 mm.

Une caractéristique avantageuse du pneumatique selon l'invention est que l'étanchéité du sommet est renforcée par la présence des renforts plats. L'épaisseur de la couche interne d'étanchéité (non représentée sur les figures 2 à 9) peut être sensiblement réduite sous le sommet. Cette caractéristique permet donc de réduire encore l'épaisseur et la masse totale du sommet.

Les renforts plats peuvent être des renforts métalliques, composites ou polymères.

De préférence, les renforts plats sont en polymère, de préférence encore en polymère thermoplastique. Par exemple, un film de polymère thermoplastique étiré multiaxialement, c'est-à-dire étiré, orienté dans plus d'une direction, est utilisable. De tels films étirés multiaxialement sont bien connus, utilisés essentiellement à ce jour dans l'industrie de l'emballage (*"packaging"*)*,* de l'alimentaire, dans le domaine électrique ou encore en tant que support de revêtements magnétiques.

Ils sont préparés selon diverses techniques d'étirage bien connues, toutes destinées à conférer au film des propriétés mécaniques élevées dans plusieurs directions principales et non dans une seule direction comme c'est le cas pour des fibres usuelles en polymère thermoplastique (par exemple en PET ou "Nylon") qui sont de manière connue étirées monoaxialement lors de leur filage au fondu.

De telles techniques font appel à des étirages multiples dans plusieurs directions, étirages longitudinaux, transversaux, étirages planaires ; à titre d'exemple, on peut notamment citer la technique de bi-étirage par soufflage.

Des films de polymère thermoplastique étirés multiaxialement ainsi que leur procédés d'obtention ont été décrits dans de nombreux documents brevets, par exemple dans les documents FR 2539349 (ou GB 2134442), DE 3621205, EP 229346 (ou US 4876137), EP 279611 (ou US 4867937), EP 539302 (ou US 5409657) et WO 2005/011978 (ou US 2007/0031691).

Les étirages peuvent être réalisés en une ou plusieurs fois, les étirages lorsqu'ils sont plusieurs pouvant être simultanés ou séquencés ; le ou les taux d'étirage appliqués sont fonction des propriétés mécaniques finales visées, généralement supérieurs à 2.

De préférence, le film de polymère thermoplastique utilisé présente, quelle que soit la direction de traction considérée, un module en extension noté E qui est supérieur à 500 MPa (notamment entre 500 et 4000 MPa), plus préférentiellement supérieur à 1000 MPa (notamment entre 1000 et 4000 MPa), plus préférentiellement encore supérieur à 2000 MPa. Des valeurs de module E comprises entre 2000 et 4000 MPa, en particulier entre 3000 et 4000 MPa sont particulièrement souhaitables comme couche de triangulation du sommet selon l'invention.

Selon un autre mode préférentiel, quelle que soit la direction de traction considérée, la contrainte maximale en traction notée σₘₐₓ du film de polymère thermoplastique est de préférence supérieure à 80 MPa (notamment entre 800 et 200 MPa), plus préférentiellement supérieure à 100 MPa (notamment entre 100 et 200 MPa). Des valeurs de contrainte σₘₐₓ supérieures à 150 MPa, en particulier comprises entre 150 et 200 MPa, sont particulièrement souhaitables.

Selon un autre mode préférentiel, quelle que soit la direction de traction considérée, le seuil de déformation plastique noté Yp (connu aussi sous le terme anglais de *"yield point"*) du film de polymère thermoplastique est situé au-delà de 3% d'allongement, notamment entre 3 et 15%. Des valeurs Yp au-delà de 4%, en particulier comprises entre 4 et 12%, sont particulièrement souhaitables.

Selon un autre mode préférentiel, quelle que soit la direction de traction considérée, le film de polymère thermoplastique présente un allongement à la rupture noté Ar qui est supérieur à 40% (notamment entre 40 et 200%), plus préférentiellement supérieur à 50%. Des valeurs de Ar comprises entre 50 et 200% sont particulièrement souhaitables.

Les propriétés mécaniques énoncées ci-dessus sont bien connues de l'homme du métier, déduites des courbes force-allongement, mesurées par exemple selon la norme ASTM F 638-02 pour des bandes d'épaisseur supérieures à 1 mm, ou encore selon la norme ASTM D882-09 pour des feuilles fines ou films dont l'épaisseur est au plus égale à 1 mm ; les valeurs de module E et de contrainte σₘₐₓ ci-dessus, exprimées en MPa, sont calculées par rapport à la section initiale de l'éprouvette tractionnée.

Le film de polymère thermoplastique utilisé est de préférence du type stabilisé thermiquement, c'est-à-dire qu'il a subi, après étirage, un ou plusieurs traitements thermiques destinés de manière connue à limiter sa contraction (ou retrait) thermique à haute température ; de tels traitements thermiques peuvent consister notamment en des recuits, des trempes ou des combinaisons de tels recuits ou trempes.

Ainsi, et de préférence, le film de polymère thermoplastique utilisé présente, après 30 min à 150°C, une contraction relative de sa longueur qui est inférieure à 5%, de préférence inférieure à 3% (mesurée selon ASTM D1204).

La température de fusion ("Tf") du polymère thermoplastique utilisé est préférentiellement choisie supérieure à 100°C, plus préférentiellement supérieure à 150°C, en particulier supérieure à 200°C.

Le polymère thermoplastique est choisi préférentiellement dans le groupe constitué par les polyamides, les polyesters et les polyimides, plus particulièrement dans le groupe constitué par les polyamides et les polyesters. Parmi les polyamides, on peut citer notamment les polyamides 4-6, 6, 6-6, 11 ou 12. Parmi les polyesters, on peut citer par exemple les PET (polyéthylène téréphthalate), PEN (polyéthylène naphthalate), PBT (polybutylène téréphthalate), PBN (polybutylène naphthalate), PPT (polypropylène téréphthalate), PPN (polypropylène naphthalate).

Le polymère thermoplastique est préférentiellement un polyester, plus préférentiellement un PET ou PEN.

Des exemples de films de polymère thermoplastique PET étirés multiaxialement, convenant à la couche de triangulation du sommet de l'invention, sont par exemple les films de PET bi-étirés commercialisés sous les dénominations "Mylar" et "Melinex" (société DuPont Teijin Films), ou encore "Hostaphan" (société Mitsubishi Polyester Film).

Dans la couche de triangulation du sommet de l'invention, l'épaisseur du film de polymère thermoplastique est de préférence comprise entre 0,05 et 1 mm, plus préférentiellement entre 0,1 et 0,7 mm. Par exemple, des épaisseurs de film de 0,20 à 0,60 mm se sont révélées tout à fait convenir.

Le film de polymère thermoplastique peut comporter des additifs ajoutés au polymère, notamment au moment de la mise en forme de ce dernier, ces additifs pouvant être par exemple des agents de protection contre le vieillissement, des plastifiants, des charges telles que silice, argiles, talc, kaolin ou encore fibres courtes ; des charges peuvent par exemple rendre la surface du film rugueuse et contribuer ainsi à améliorer sa prise de colle et/ou son adhésion aux couches de caoutchouc avec lesquelles il est destiné à être au contact.

Selon un mode de réalisation préférentiel de l'invention, le film de polymère thermoplastique est pourvu d'une couche adhésive au regard de chaque couche de composition de caoutchouc avec laquelle il est au contact.

Pour faire adhérer le caoutchouc au film de polymère thermoplastique, on pourra utiliser tout système adhésif approprié, par exemple une simple colle textile du type "RFL" (résorcinol-formaldéhyde-latex) comportant au moins un élastomère diénique tel que du caoutchouc naturel, ou toute colle équivalente connue pour conférer une adhésion satisfaisante entre du caoutchouc et des fibres thermoplastiques conventionnelles telles que des fibres en polyester ou en polyamide.

A titre d'exemple, le procédé d'encollage peut comporter essentiellement les étapes successives suivantes : passage dans un bain de colle, suivi d'un essorage (par exemple par soufflage, calibrage) pour éliminer l'excès de colle; puis séchage par exemple par passage dans un four (par exemple pendant 30 s à 180°C) et enfin traitement thermique (par exemple pendant 30 s à 230°C).

Avant l'encollage ci-dessus, il peut être avantageux d'activer la surface du film, par exemple par voie mécanique et/ou physique et/ou chimique, pour améliorer sa prise de colle et/ou son adhésion finale au caoutchouc. Un traitement mécanique pourra consister par exemple en une étape préalable de matage ou de rayage de la surface ; un traitement physique pourra consister par exemple en un traitement par un rayonnement tel qu'un faisceau d'electrons ; un traitement chimique pourra par exemple consister en un passage préalable dans un bain de résine époxy et/ou composé isocyanate.

La surface du film de polymère thermoplastique étant en règle générale particulièrement lisse, il peut être également avantageux d'ajouter un épaississant à la colle utilisée, afin d'améliorer la prise totale de colle du film lors de son encollage.

L'homme du métier comprendra aisément que la connexion entre le film de polymère thermoplastique et chaque couche de caoutchouc avec laquelle il est au contact est assurée définitivement lors de la cuisson (réticulation) finale du pneumatique.

Dans le pneumatique selon l'invention, les renforts circonférentiels (41, 42) de ceinture sont de préférence relativement rigides, leur module d'élasticité étant de préférence compris entre 25 et 250 GPa, de préférence entre 40 GPa et 250 GPa.

Comme exemples de renforts circonférentiels, sont par exemple utilisables des câbles en acier au carbone ou en acier inoxydable, des câbles textiles constitués de fibres retordues entre elles, en particulier des câbles connus pour leur stabilité dimensionnelle relativement à la température et/ou l'humidité. Les fibres textiles de ces câbles sont par exemple choisies dans le groupe constitué par les fibres d'alcool polyvinylique, de polyamide aromatique (ou "aramide"), de polyamide aliphatique (ou "Nylon), de polyester (e.g. PET ou PEN), de polyester aromatique, de cellulose (par exemple rayonne, viscose), de polyphénylène benzobisoxazole, de polycétone, les fibres de verre, de carbone, les fibres céramiques. A titre particulièrement préférentiel, on citera notamment des renforts en acier au carbone, aramide, polyester, nylon, cellulose, polycétone, ainsi que des renforts hybrides constitués de ces différents matériaux tels que des câbles aramide/nylon.

Les renforts de la carcasse ou les renforts de la ceinture circonférentielle peuvent prendre toute forme connue, il peut s'agir par exemple de monofilaments élémentaires de diamètre important (par exemple et de préférence égal ou supérieur à 50 µm), de fibres multifilamentaires (constituées d'une pluralité de filaments élémentaires de faible diamètre, typiquement inférieur à 30 µm), de retors textiles formés de plusieurs fibres retordues ensemble, de câbles textiles ou métalliques formés de plusieurs fibres ou monofilaments câblés ou retordus ensemble.

Des pneumatiques selon un mode de réalisation similaire à celui de la figure 2 ont été comparés à des pneumatiques tourisme selon l'état de la technique.

La dimension testée est 205/55R16. Les renforts plats 55 de la couche de triangulation 5 sont en film PET bi-étiré d'épaisseur 350 µm, ils sont posés à un angle α de 40° et ont chacun une largeur de 30 mm. La couche de triangulation ainsi constituée a une largeur de 180 mm. La ceinture de sommet utilise un câble en aramide. Le pneumatique selon l'invention a ainsi une masse de 8 kg alors que le pneumatique selon l'état de la technique (MICHELIN ENERGY^{tm} Saver 205/55R16) a une masse de 6,8 kg, soit un gain de 15%.

On a par ailleurs mesuré la rigidité de dérive (« cornering stiffness »), c'est à dire l'effort transversal Fy produit par le pneumatique sous une charge verticale Fz de 600 daN en roulage à 1° de dérive. Alors que le pneumatique selon l'état de la technique (MICHELIN ENERGY^{tm} Saver 205/55R16) développe 1700 N d'effort transversal, le pneumatique selon l'invention développe 1650 N d'effort transversal.

On peut donc constater que le pneumatique selon l'invention est sensiblement plus léger que le pneumatique selon l'état de la technique sans perte significative de rigidité de dérive.

## Revendications

1. Pneumatique pour véhicule de tourisme dont l'armature de sommet consiste en trois éléments distincts, lesdits trois éléments distincts consistant en :
● une armature de carcasse radiale (2) formée de renforts reliant les deux bourrelets du pneumatique,
● une ceinture de sommet'consistant essentiellement en des renforts parallèles à la direction circonférentielle du pneumatique, et
● une couche de triangulation du sommet (5), consistant essentiellement en des renforts (55) formant un angle compris entre 10 degrés et 80 degrés avec la direction circonférentielle du pneumatique, **caractérisé en ce que** lesdits renforts (55), de la couche de triangulation (5) ont une section aplatie.

2. Pneumatique selon la revendication 1 dans lequel les renforts'de section aplatie de la couche de triangulation (5) sont en polymère.

3. Pneumatique selon la revendication 2 dans lequel les renforts (55) de section aplatie de la couche de triangulation (5), sont en film polymère thermoplastique.

4. Pneumatique selon la revendication 3, dans lequel le film de polymère thermoplastique est un film de polyéthylène téréphtalate (PET) étiré multiaxialement.

5. Pneumatique selon l'une des revendications précédentes dans lequel la couche de triangulation du sommet (5), est située radialement à l'extérieur de la ceinture de sommet (4).

6. Pneumatique selon l'une des revendications 1 à 4 dans lequel la couche de triangulation du sommet (5) est située radialement à l'intérieur de la ceinture de sommet (4). triangulation du sommet (5) est située radialement à l'intérieur de la ceinture de sommet (4).

7. Pneumatique selon l'une des revendications précédentes dans lequel les renforts de ceinture de sommet (4) ont un module de traction supérieur à 25 GPa.

8. Pneumatique selon la revendication 7 dans lequel les renforts de ceinture de sommet (4), comprennent de l'acier ou de l'aramide.

9. Pneumatique selon l'une quelconque des revendications précédentes, dans lequel les renforts (55), de section aplatie de la couche de triangulation (5), présentent un module de traction supérieur à 1 GPa.

10. Pneumatique selon l'une quelconque des revendications précédentes dans lequel le pas entre deux renforts (55), de section aplatie de la couche de triangulation (5), est supérieur à la somme de leurs demi-largeurs, le pas étant mesuré selon une direction transverse aux renforts (55).

11. Pneumatique selon l'une quelconque des revendications 1 à 9, dans lequel le pas entre deux renforts (55), section aplatie de la couche de triangulation (5), est inférieur à la somme de leurs demi-largeurs, le pas étant mesuré selon une direction transverse aux renforts (55).

12. Pneumatique selon la revendication 11, dans lequel le pas est inférieur à la somme de leurs demi-largeurs d'une valeur (« R ») égale à au moins quatre fois leur épaisseur maximale.

13. Pneumatique selon l'une quelconque des revendications précédentes, dans lequel la largeur des renforts (55), section aplatie de la couche de triangulation (55) est au moins égale à 5 fois leur épaisseur maximale et de préférence au moins égale à 20 fois leur épaisseur maximale.

14. Pneumatique selon l'une quelconque des revendications précédentes, dans lequel la couche de triangulation (5), consiste essentiellement en des renforts (55), formant un angle compris entre 25 degrés et 60 degrés avec la direction circonférentielle du pneumatique.

## Patentansprüche

1. Luftreifen für ein Personenfahrzeug, dessen Scheitelbewehrung aus drei unterschiedlichen Elementen besteht, wobei die drei unterschiedlichen Elemente bestehen aus:
• einer radialen Karkassenbewehrung (2), die aus Verstärkungen geformt ist, welche die zwei Wülste des Luftreifens verbinden,
• einem Scheitelgürtel (4), der hauptsächlich aus zur Umfangsrichtung des Luftreifens parallelen Verstärkungen besteht, und
• einer Triangulationsschicht des Scheitels (5), die hauptsächlich aus Verstärkungen (55) besteht, die einen Winkel zwischen 10 Grad und 80 Grad mit der Umfangsrichtung des Luftreifens bilden,
**dadurch gekennzeichnet, dass** die Verstärkungen (55) der Triangulationsschicht (5) einen abgeflachten Querschnitt haben.

2. Luftreifen nach Anspruch 1, bei dem die Verstärkungen (55) mit abgeflachtem Querschnitt der Triangulationsschicht (5) aus Polymer sind.

3. Luftreifen nach Anspruch 2, bei dem die Verstärkungen (55) mit abgeflachtem Querschnitt der Triangulationsschicht (5) aus einer thermoplastischen Polymerfolie sind.

4. Luftreifen nach Anspruch 3, bei dem die thermoplastische Polymerfolie eine multiaxial gestreckte Folie aus Polyethylenterephthalat (PET) ist.

5. Luftreifen nach einem der vorhergehenden Ansprüche, bei dem die Triangulationsschicht des Scheitels (5) sich radial außerhalb des Scheitelgürtels (4) befindet.

6. Luftreifen nach einem der Ansprüche 1 bis 4, bei dem die Triangulationsschicht des Scheitels (5) sich radial innerhalb des Scheitelgürtels (4) befindet.

7. Luftreifen nach einem der vorhergehenden Ansprüche, bei dem die Scheitelgürtelverstärkungen (4) ein Zugmodul größer als 25 GPa haben.

8. Luftreifen nach Anspruch 7, bei dem die Scheitelgürtelverstärkungen (4) Stahl oder Aramid enthalten.

9. Luftreifen nach einem der vorhergehenden Ansprüche, bei dem die Verstärkungen (55) mit abgeflachtem Querschnitt der Triangulationsschicht (5) ein Zugmodul größer als 1 GPa aufweisen.

10. Luftreifen nach einem der vorhergehenden Ansprüche, bei dem der Abstand zwischen zwei Verstärkungen (55) mit abgeflachtem Querschnitt der Triangulationsschicht (5) größer als die Summe ihrer Halbbreiten ist, wobei der Abstand gemäß einer Richtung quer zu den Verstärkungen (55) gemessen wird.

11. Luftreifen nach einem der Ansprüche 1 bis 9, bei dem der Abstand zwischen zwei Verstärkungen (55) mit abgeflachtem Querschnitt der Triangulationsschicht (5) geringer als die Summe ihrer Halbbreiten ist, wobei der Abstand gemäß einer Richtung quer zu den Verstärkungen (55) gemessen wird.

12. Luftreifen nach Anspruch 11, bei dem der Abstand um einen Wert («R») gleich mindestens dem Vierfachen ihrer maximalen Dicke geringer als die Summe ihrer Halbbreiten ist.

13. Luftreifen nach einem der vorhergehenden Ansprüche, bei dem die Breite der Verstärkungen (55) mit abgeflachtem Querschnitt der Triangulationsschicht (5) mindestens gleich dem Fünffachen ihrer maximalen Dicke und vorzugsweise mindestens gleich dem Zwanzigfachen ihrer maximalen Dicke ist.

14. Luftreifen nach einem der vorhergehenden Ansprüche, bei dem die Triangulationsschicht (5) hauptsächlich aus Verstärkungen (55) besteht, die einen Winkel zwischen 25 Grad und 60 Grad mit der Umfangsrichtung des Luftreifens bilden.

## Claims

1. Passenger vehicle tyre, the crown reinforcement of which consists of three distinct elements, the said three distinct elements consisting of :
● a radial carcass reinforcement formed of reinforcing elements connecting the two beads of the tyre,
● a crown belt essentially consisting of reinforcing elements parallel to the circumferential direction of the tyre, and
● a crown triangulation layer essentially consisting of reinforcing elements making an angle of between 10 degrees and 80 degrees with the circumferential direction of the tyre, **characterized in that** the said reinforcing elements of the triangulation layer have a flattened cross section.

2. Tyre according to Claim 1, in which the reinforcing elements of flattened cross section of the triangulation layer are made of polymer.

3. Tyre according to Claim 2, in which the reinforcing elements of flattened cross section of the triangulation layer are made of thermoplastic polymer film.

4. Tyre according to Claim 3, in which the thermoplastic polymer film is a polyethylene terephthalate (PET) film that has undergone multi axis stretching.

5. Tyre according to one of the preceding claims, in which the crown triangulation layer is situated radially on the outside of the crown belt.

6. Tyre according to one of Claims 1 to 4, in which the crown triangulation layer is situated radially on the inside of the crown belt.

7. Tyre according to one of the preceding claims, in which the reinforcing elements of the crown belt have a tensile modulus higher than 25 GPa.

8. Tyre according to Claim 7, in which the reinforcing elements of the crown belt contain steel or aramid.

9. Tyre according to any one of the preceding claims, in which the reinforcing elements of flattened cross section of the triangulation layer have a tensile modulus greater than 1 GPa.

10. Tyre according to any one of the preceding claims, in which the spacing between two reinforcing elements of flattened cross section in the triangulation layer is greater than sum of their half-widths, the spacing being measured in a direction transverse to the reinforcing elements.

11. Tyre according to any one of Claims 1 to 9, in which the spacing between two reinforcing elements of flattened cross section of the triangulation layer is less than the sum of their half-widths, the spacing being measured in a direction transverse to the reinforcing elements.

12. Tyre according to Claim 11, in which the spacing is less than the sum of their half-widths by a value ("R") equal to at least four times their maximum thickness.

13. Tyre according to any one of the preceding claims, in which the width of the reinforcing elements of flattened cross section of the triangulation layer is at least equal to 5 times their maximum thickness and preferably at least equal to 20 times their maximum thickness.

14. Tyre according to any one of the preceding claims, in which the triangulation layer essentially consists of reinforcing elements making an angle of between 25 degrees and 60 degrees with the circumferential direction of the tyre.
